# EUROPEAN PATENT APPLICATION

(11) **EP 4 614 454 A1**
(43) Date of publication of application: **10.09.2025**
(21) Application number: 24161361.1
(22) Date of filing: 05.03.2024
(51) Int. Cl.: G06V 10/25, G06T 5/00, G06V 10/82, G06V 20/56

(54) **METHOD FOR ENHANCING OBJECT DETECTION**

(71) Applicant: Robert Bosch GmbH, 70442 Stuttgart (DE)
(72) Inventor: Suceveanu, Mircea, Cluj Napoca, Cluj county (RO)

(57) **Abstract**

The invention relates to a method (100) for enhancing an object detection, comprising the following steps:
- Providing (101) an image, the image resulting from an acquisition by at least one sensor (3),
- Extracting (102) at least one region of interest in the image by means of a machine learning model,
- Applying (103) a Generative Adversarial Network to generate an enhanced image with an enhanced at least one region of interest based on the image and the extracted at least one region of interest,
- Performing (104) an object detection in the enhanced image utilizing the enhanced at least one region of interest.

Furthermore, the invention relates to a computer program, an apparatus, and a storage medium for this purpose.

## Description

The invention relates to a method for enhancing an object detection. Furthermore, the invention relates to a computer program, an apparatus, and a storage medium for this purpose.

### State of the art

Generative Adversarial Networks (GANs) are known to have the capacity to do super-resolution, deblurring, denoising, inpainting, and colorization.

A problem working in the computer vision domain is implementing object detectors runnable on camera. Here the term camera does not refer to a specific model or a specific maker as the problem is widespread and currently requires sophisticated algorithms, in some cases dedicated teams, to fix the issue. Cameras have the disadvantage of physics in a way that not one camera lens is similar to another and this is an issue attributed to the way said lenses are produced when melted glass, in each maker's specifications, is poured into shape by a marginal error. Even the slightest error in the 1 micron range affects how light is captured by the sensor and translated into pixels. Hence a computer vision project, even if working with cameras from a specific maker, has to dedicate time for calibrating cameras and such operations require operations to correct the fish-eye effect, pixel coloring and pixel density. Modern computer vision solutions rely heavily on statistics and pattern matching, and yet the slightest change in pixel density lead to redundant results often translated in more work hours for research and error correction.

### Disclosure of the invention

According to aspects of the invention a method with the features of claim 1, a computer program with the features of claim 8, a data processing apparatus with the features of claim 9 as well as a computer-readable storage medium with the features of claim 10 are provided. Further features and details of the invention are disclosed in the respective dependent claims, the description and the drawings. Features and details described in the context to the method also correspond to the inventive computer program, the inventive data processing apparatus as well as the inventive computer-readable storage medium, and vice versa in each case.

According to an aspect of the invention a method for enhancing an object detection is provided, the method comprising the following steps, wherein the steps may be carried out repeatedly and/or successively.

In a first step an image may be provided, the image resulting from an acquisition by at least one sensor. The at least one sensor may be a camera sensor and the image may be a digital image. The image may be provided by retrieving the image from a digital storage medium or a database by means of a computer processor.

In another step, at least one region of interest in the image may be extracted by means of a machine learning model. The machine learning model may be trained to extract the region of interest in the image by using object detection. The machine learning model may therefore first be trained on a dataset of images with annotations that specify the location of the object of interest in each image. The machine learning model may then learn to recognize patterns in the images that correspond to the object of interest. Once the machine learning model has been trained, it may be used to detect the object of interest in new images. The machine learning model may take an image as input and may output a bounding box that encloses the object of interest. The bounding box can then be used to extract the region of interest from the image.

In another step, a Generative Adversarial Network may be applied to generate an enhanced image with an enhanced at least one region of interest based on the image and the extracted at least one region of interest. A generative adversarial network (GAN) may comprise two neural networks: a generator and a discriminator. The generator may create images, while the discriminator may learn to distinguish between real images and images created by the generator. To generate the enhanced image, the GAN may first be trained with a data set of images. The generator may then create a new image that is similar to the original but with some improvements. The discriminator may evaluate the generated image and provide feedback to the generator, which may then adjust the image accordingly. This process may be repeated until the generated image is sufficiently enhanced. The GAN may also or additionally be trained with a specific goal, such as removing image noise or improving image resolution. The generator may then produce images that fulfil the desired goal, while the discriminator may provide feedback to improve the result.

In another step, an object detection in the enhanced image may be performed utilizing the enhanced at least one region of interest. There are various methods and algorithms that may be used for object detection. Some of them are described hereinafter. Histogram of Oriented Gradients (HOG) is a feature extraction method that may use a gradient direction of pixels in an image to extract features. This method may be used for recognizing people. Deep learning is based on artificial neural networks that may be able to extract and learn complex features. This method may be used to recognize objects in images and videos. Region-based Convolutional Neural Networks (R-CNN) is a deep learning model based on the recognition of regions in an image. This method may be used for recognizing objects in images and videos. YOLO (You Only Look Once) is a deep learning model based on the recognition of objects in real time. This method may also be used for recognizing objects in images or videos. Single-Shot-Detection (SSD) is another machine learning model that may be used. Another possible machine learning model that may be used is a MultiTask training network. This is particularly a kind of network which has multiple output heads, for example one for a pedestrian detection, another for a vehicle detection, a lane detection, painted arrows etc. Furthermore, the input and backbone of the MultiTask training network may be singular. Said network may be similar to Tesla's "HydraNET" with a similar neural network architecture. Additionally, the MultiTask training network may be a Hybrid MultiTask network, where the network may be able to operate on more than pixel data, but also on numerical data (for example provided by Radar/LiDAR/or various car sensors which do not operate with cameras). In this case the GAN according to the present invention may be used only for the pixel-input data types.

The Generative Adversarial Network may be trained to generate realistic images from drawn patterns of the same images. The generative adversarial network (GAN) may be trained to generate the realistic images from drawn patterns of the same images by training it in an iterative process. First, the GAN may be trained with a dataset of drawn patterns of the images. As mentioned above, the GAN may comprise two main components: the generator and the discriminator. The generator may generate the realistic images from the drawn patterns, while the discriminator may distinguish the generated images from real, i.e. reference, images. During the training process, the generator may generate images from the drawn patterns and the discriminator may evaluate whether the generated image is realistic or of a sufficiently high quality. The generator may then be adjusted to generate better images, while the discriminator may be adjusted to better distinguish between the real, i.e. reference, images and the generated images. This process may continue iteratively until the generator generates images that the discriminator cannot distinguish from the reference images. Once the GAN is trained, it may be used to generate the realistic images from drawn patterns of the same images.

The object detection may be performed by the machine learning model. In this case, the GAN may be provided as an additional layer in the machine learning model to improve the object detection thereof. This may be advantageous in that only one connected machine learning model has to be used.

The object detection may also be performed by a different machine learning model. This may be advantageous in that the different machine learning model may be specialized in object detection while the machine learning model may be specialized in extracting the at least one region of interest.

In an example, the at least one sensor is installed in a vehicle and the image represents a road environment of the vehicle, particularly in a driving direction of the vehicle, and the method further comprises the following step:
- Initiating an acquisition of the image by means of the at least one sensor. The at least one region of interest may then encircle objects to be detected like other vehicles or pedestrians. Based on the detected object, the vehicle may alarm a driver of the vehicle or may initiate a measure like a breaking or steering manoeuvre, if the vehicle is an at least semi-automated vehicle.

In an alternative example, the at least one sensor is installed in a train and the image represents a railway environment of the train, particularly in a driving direction of the train, and the method further comprises the following step:
- Initiating an acquisition of the image by means of the at least one sensor. The at least one region of interest may then encircle objects to be detected like obstacles on the railway or pedestrians. Based on the detected object, the train may initiate a measure like a breaking manoeuvre or may alarm a conductor of the train.

According to another example, the method further comprises the following step:
- Displaying a result of the object detection, the result comprising a description of at least one detected object and/or the enhanced image and/or the enhanced region of interest.
The result may be displayed on a respective display to be evaluated by a user. As the user may be a driver of a vehicle or a conductor of a train, he may then react accordingly, for example by initiating a breaking manoeuvre. The description may for example state that a person or obstacle is detected on a road ahead of the vehicle or on the railway ahead of the train and may also include parameters like a distance to the person or obstacle.

In another aspect of the invention, a computer program may be provided, in particular a computer program product, comprising instructions which, when the computer program is executed by a computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, a computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by a computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:

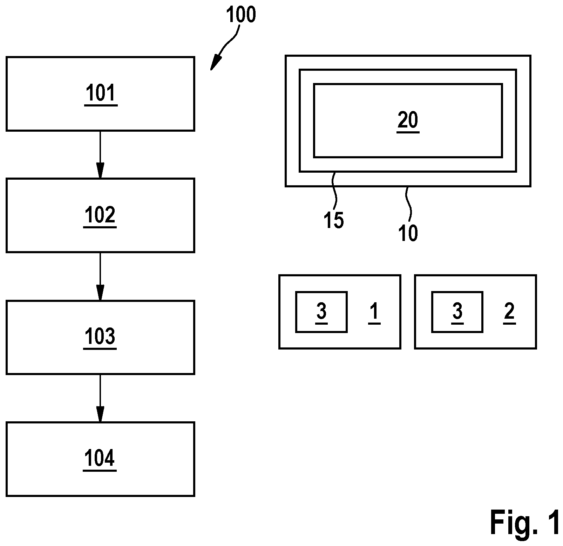

- Fig. 1:: A method, a vehicle with a sensor, a train with a sensor, computer program, a computer-readable storage medium and a data processing apparatus according to embodiments of the invention.

Fig. 1 shows a method 100, a vehicle 1 with a sensor 3, a train 2 with a sensor 3, a computer program 20, a computer-readable storage medium 15 and a data processing apparatus 10 according to embodiments of the invention.

Fig. 1 particularly shows an embodiment of a method 100 for enhancing an object detection. In a first step 101, an image is provided, the image resulting from an acquisition by at least one sensor 3. In a second step 102 at least one region of interest in the image is extracted by means of a machine learning model. In a third step 103, a Generative Adversarial Network is applied to generate an enhanced image with an enhanced at least one region of interest based on the image and the extracted at least one region of interest. In a fourth step 104, an object detection in the enhanced image is performed utilizing the enhanced at least one region of interest.

The present invention according to embodiments adds an additional (hidden) layer to a machine learning model, for example a Mask-Recursive-Convolutional-Neural-Network (MRCNNs) like YOLO (You-Only-Look-Once) or SSD (Single-Shot-Detection), and may improve a detection rate of the machine learning model to otherwise impaired detection usages because of physical constraints like microscopic defects in the lenses or a disability to focus on specific camera regions.

The camera calibration step may be a step that is done once in the life of a camera, before it can be used for computer vision operations. The matter which the calibration step may not fix is a blur associated with a regions of interest (ROI) extraction. By ROI one understands "region of interest" because for example in the case of a rail transportation a train conductor may have to offer utmost attention to one particular region that one sees: the rail signal at the side (to be properly defined: left or right side, both are possible even at the same time) of the track.

Train safety may rely on the train conductors eye to hand coordination, hence an early spotting of the rail signal may be preferred and encouraged and this may be the benchmark expectation of the machine learning model for rail signal detection: early and accurate detection.

One impediment behind an early and accurate detection may be blur. Doing object detection tasks in real time over a single camera may have the drawback of prohibiting the camera from object focalization. One may not focus the camera on a particular object or region within the image because the camera is used for multiple object detections tasks and focusing the camera on a particular object or region for a specific detector may have the side effect of impairing remaining detectors.

And as such a as-clear-as-possible image of the entire scene may be captured, a ROI may be extracted and the object detection and classification may be carried out.

One problem may be the ROI extraction phase because objects found the farthest may have the greatest chances of being victim of pixel cluttering either by too little amounts of pixels or motion blur. Normally such anomalies may be fixed with camera focus, but this may not always be possible because focusing on one specific object or region of the image would mean disabling or impairing other object detections that would run on the same camera. Hence said detectors may have to handle high-definition (signal closeups) and low-resolution (far aways) crop-by-ROI signals to cover any potential use cases, yet low-resolution images may remain an open issue.

The invention according to embodiments particularly targets the pixel density. A Generative Adversarial Network (GAN) may therefore be trained on generating realistic images like real life rail signal images from mere drawn patterns of the same images. If used to generate an image from a real life blurred image, the GAN may improve the pixel quality and hence result in a slightly chiseled image that may improve the object detection's performance.

According to an example, instead of giving a cropped rail signal right away (as soon as the ROI would be found) to an object detection, the cropped rail signal may be fed to a GAN according to embodiments of the invention, which may generate an enhanced cropped version of the original rail signal and that enhanced version may be fed to the object detection.

ROI extraction and detection may be done by Mask-Recursive-Convolutional-Neural-Networks (MRCNNs) like YOLO (You-Only-Look-Once) or SSD (Single-Shot-Detection) but these networks' performance may heavily rely on camera quality. The better the captured image, the better the performance may be. A problem may be that the more information is found in the image because of a higher resolution camera, the more memory may be needed. Also, the network that is used may tend to be heavier in terms of CPU power and memory that is needed and hence a higher resolution camera apart from being expensive may lead to ineffective results as a heavier network may not be used on low-powered systems, i.e. hardware running ARM CPUs which require energy efficiency.

In the case of 2-stage-GAN-detection one may work with low quality images according to embodiments of the invention. A detector may need to extract ROls slightly resembling images like rail signals, enhance the images and then run a regular object classifier which may advantageously be less time and resource intensive than YOLO or SSD.

Structurally, the invention according to embodiments may be an additional layer to a regular Mask RCNN and the purpose of this layer may be to enhance the proposed ROIs so as to increase detection accuracy. In the context of not being able to focus the camera on specific regions of the image, deterring the blur caused by the ROI extraction may be done cheaply only with an algorithm that enhances the ROI.

Alternatives to the GAN ROI enhancer according to embodiments of the present invention may only be a dedicated camera which may be expensive, a dynamic focus which may not be feasible without interfering other detectors or a high-resolution camera which may also be expensive.

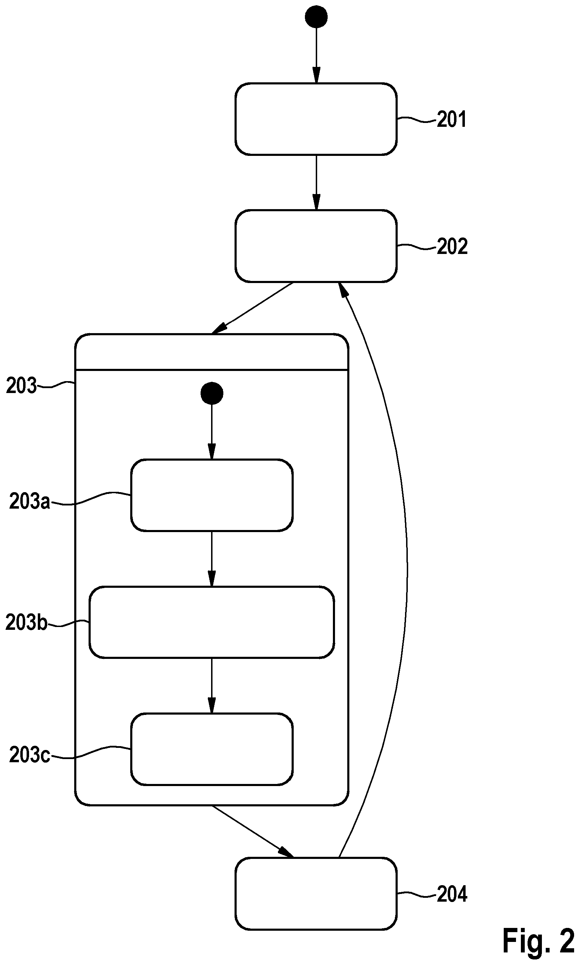

Fig. 2 shows an embodiment of a method according to the invention. In a first step 201, a camera is started. In a second step 202, an image is captured. In a third step 203, a dedicated network is applied to the image. In a first step 203a of said application, at least one region of interest is extracted. In a second step 203b of said application, a Generative Adversarial Network is applied to generate an enhanced image based on the image and to enhance the extracted region of interest. In a third step 203c of said application, a machine learning model is applied to perform an object detection based on the enhanced image and the enhanced region of interest. In a fourth step 204 of the method according to this embodiment, the results are displayed.

The above explanation of the embodiments describes the present invention in the context of examples. Of course, individual features of the embodiments can be freely combined with each other, provided that this is technically reasonable, without leaving the scope of the present invention.

## Claims

1. A method (100) for enhancing an object detection, comprising the following steps:
- Providing (101) an image, the image resulting from an acquisition of at least one sensor (3),
- Extracting (102) at least one region of interest in the image by means of a machine learning model,
- Applying (103) a Generative Adversarial Network to generate an enhanced image with an enhanced at least one region of interest based on the image and the extracted at least one region of interest,
- Performing (104) an object detection in the enhanced image utilizing the enhanced at least one region of interest.

2. The method (100) of claim 1, **characterized in that** the Generative Adversarial Network is trained to generate realistic images from drawn patterns of the same images.

3. The method (100) of any one of the preceding claims, **characterized in that** the object detection is performed by the machine learning model.

4. The method (100) of any one of the preceding claims, **characterized in that** the object detection is performed by a different machine learning model.

5. The method (100) of any one of the preceding claims, **characterized in that** the at least one sensor (3) is installed in a vehicle (1) and the image represents a road environment of the vehicle (1), particularly in a driving direction of the vehicle (1), and the method (100) further comprises the following step:
- Initiating an acquisition of the image by means of the at least one sensor (3).

6. The method (100) of any one of the preceding claims, **characterized in that** the at least one sensor (3) is installed in a train (2) and the image represents a railway environment of the train (2), particularly in a driving direction of the train, and the method (100) further comprises the following step:
- Initiating an acquisition of the image by means of the at least one sensor (3).

7. The method (100) of any one of the preceding claims, **characterized in that** the method (100) further comprises the following step:
- Displaying a result of the object detection, the result comprising a description of at least one detected object and/or the enhanced image and/or the enhanced region of interest.

8. A computer program (20), comprising instructions which, when the computer program (20) is executed by a computer (10), cause the computer (10) to carry out the method (100) of any one of the preceding claims.

9. A data processing apparatus (10), comprising means for carrying out the method (100) of any one of claims 1 to 7.

10. A computer-readable storage medium (15) comprising instructions which, when executed by a computer (10), cause the computer (10) to carry out the steps of the method (100) of any one of claims 1 to 7.
